# FASCICULE DE BREVET EUROPEEN

(11) **EP 3 983 289 B1**
(45) Date de publication et mention de la délivrance du brevet: **09.08.2023**
(21) Numéro de dépôt: 20735482.0
(22) Date de dépôt: 12.06.2020
(51) Int. Cl.: B64C 1/14

(54) **PORTE D'AERONEF A DISPOSITIF DE MAINTIEN DES BRAS DE MANIPULATION**
FLUGZEUGTÜR MIT EINER VORRICHTUNG ZUR FIXIERUNG DER TÜRAUSLEGERARME
AIRCRAFT DOOR WITH A DEVICE FOR FIXING THE DOOR MANIPULATOR ARMS

(30) Priorité: 15.06.2019 FR 1906437
(43) Date de publication de la demande: 20.04.2022
(73) Titulaire: Latecoere, 31500 Toulouse (FR)
(72) Inventeur: DUBOSC, Grégory, 82170 GRISOLLES (FR)
(74) Mandataire: Junca, Eric
(86) Numéro de dépôt international: PCT/EP2020/025274
(87) Numéro de publication internationale: WO 2020/253985

(56) Documents cités:
- EP-A1- 1 227 034
- DE-A1-102004 036 184
- US-A- 4 199 120

## Description

### DOMAINE TECHNIQUE

L'invention concerne le domaine de l'aéronautique et concerne plus particulièrement les portes d'aéronefs et leurs mécanismes d'ouverture et de fermeture.

Un aéronef comporte généralement plusieurs ouvertures dans son fuselage, pour permettre l'accès à la cabine ou aux soutes. Ces ouvertures sont munies de portes dont le mécanisme de verrouillage/déverrouillage doit assurer la solidité du verrouillage et l'étanchéité de cette porte pendant le vol. De plus, l'ouverture doit être simple et rapide à réaliser par le personnel navigant depuis l'intérieur de l'aéronef, ou par des équipes de secours depuis l'extérieur. La résistance à la différence de pression entre intérieur de la cabine et l'extérieur de l'avion est réalisée au moyen de butées installées sur les pourtours de l'ouvrant de la porte et de son encadrement.

### ART ANTÉRIEUR

Les portes d'aéronefs connues comportent généralement : un ouvrant ; un dormant comprenant un cadre de porte destiné à être fixé sur le fuselage de l'aéronef ; un mécanisme de verrouillage/déverrouillage de la porte adapté à déplacer l'ouvrant par rapport au cadre de porte.

Différents systèmes d'ouverture et de fermeture existent pour les portes d'aéronef.

Un premier type de système consiste, en ouverture, d'abord à lever ou baisser la porte, verticalement, pour dégager les butées de porte des butées de cadre, puis à lui appliquer un mouvement de translation circulaire pour la dégager de son encadrement parallèlement à celui-ci.

Un autre type de système consiste d'abord à effectuer un premier pivotement autour d'un premier axe virtuel passant par la médiane verticale de la porte puis, dans un deuxième temps, la porte est pivotée autour de charnières placées sur le long d'un axe coïncidant avec un bord vertical de l'encadrement, ce qui entraine une position finale de porte avec sa partie interne tournée vers l'extérieur.

La demande de brevet EP1227034 décrit une porte d'aéronef comportant des bras de manipulation ainsi qu'un dispositif de maintien de ces bras de manipulation.

### EXPOSÉ DE L'INVENTION

L'invention a pour but d'améliorer les portes d'aéronefs de l'art antérieur et en particulier leurs moyens d'ouverture et de fermeture.

À cet effet, l'invention vise une porte d'aéronef comportant :
- un ouvrant ;
- un dormant comprenant un cadre de porte destiné à être fixé sur le fuselage de l'aéronef ;
- un mécanisme de verrouillage/déverrouillage de la porte adapté à déplacer l'ouvrant par rapport au cadre de porte.

Cette porte d'aéronef comprend :
- un premier bras de manipulation et un premier avant-bras reliés entre eux par une liaison pivot, le premier bras de manipulation étant relié au cadre de porte par une liaison pivot et le premier avant-bras étant relié à l'ouvrant par une liaison pivot ;
- un deuxième bras de manipulation et un deuxième avant-bras reliés entre eux par une liaison pivot, le deuxième bras de manipulation étant relié au cadre de porte par une liaison pivot et le deuxième avant-bras étant relié à l'ouvrant par une liaison pivot ;
- un dispositif de maintien, mobile entre : une position de blocage dans laquelle le premier avant-bras et le deuxième avant-bras sont immobilisés par rapport à l'ouvrant ; et une position de déblocage dans laquelle le premier avant-bras et le deuxième avant-bras sont libres de pivoter par rapport à l'ouvrant selon au moins un sens de rotation.

Une telle porte d'aéronef bénéficie de la possibilité d'un mouvement relatif entre l'ouvrant et le cadre de porte qui soit uniquement réalisé par des liaisons pivot. De telles liaisons mécaniques sont simples, fiables et peu onéreuses à mettre en oeuvre. Ce mouvement relatif de l'ouvrant par rapport au cadre de porte est avantageusement employé pour verrouiller et déverrouiller la porte. Le verrouillage et déverrouillage de la porte est ainsi obtenu sans recourir à des mécanismes complexes, courants dans l'art antérieur, qui comportent des glissières ou des dispositifs de levée et d'abaissement de l'ouvrant.

La porte permet ainsi des mouvements relatifs complexes entre l'ouvrant et le cadre de porte lorsque le dispositif de maintien est en position de déblocage. La porte peut de plus être configurée pour bénéficier d'une plage d'utilisation supplémentaire dans laquelle le mécanisme de maintien est en position de blocage de sorte qu'une liaison par quadrilatère déformable soit constituée entre l'ouvrant et le cadre de porte. L'ouvrant peut par exemple être déplacé en translation circulaire par rapport au cadre de porte durant cette plage d'utilisation supplémentaire.

Selon une mise en oeuvre préférée, la porte comprend ainsi une première configuration dans laquelle un mouvement relatif entre l'ouvrant et le cadre de porte permet de verrouiller ou déverrouiller la porte ; et une deuxième configuration dans laquelle la porte peut être ouverte ou fermée manuellement en déplaçant l'ouvrant en translation circulaire par rapport au fuselage de l'aéronef.

Les mécanismes permettant le déplacement de l'ouvrant et le verrouillage/déverrouillage de la porte sont ainsi uniquement basés sur des liaisons pivot avec les avantages en gain de masse, de cout, et de fiabilité qui y sont associés, en exploitant les pivots de manière modulaire.

Selon au autre objet, l'invention vise un procédé d'ouverture d'une porte d'aéronef telle que décrite ci-dessus. Ce procédé comporte :
- une première phase de déverrouillage dans laquelle le dispositif de maintien est en position de déblocage ;
- une deuxième phase d'ouverture dans laquelle le dispositif de maintien est en position de blocage.

Selon une caractéristique préférée, entre la phase de déverrouillage et la phase d'ouverture, l'ouvrant passe par une position prédéterminée dans laquelle le dispositif de maintien passe en position de blocage par le rappel, face à une surface de butée solidaire du premier avant-bras, d'une butée mobile solidaire de l'ouvrant et actionnée par une ferrure de guidage solidaire du premier bras de manipulation.

La porte d'aéronef peut présenter les caractéristiques additionnelles suivantes, seules ou en combinaison :
- le dispositif de maintien comporte une première butée et une deuxième butée adaptées à immobiliser la rotation du premier avant-bras et du deuxième avant-bras par rapport à l'ouvrant dans un sens de rotation ;
- le dispositif de maintien comporte une troisième butée adaptée à empêcher le rapprochement des deux avant-bras ;
- le dispositif de maintien comporte une butée mobile entre : une position activée dans laquelle la butée mobile verrouille la position par rapport à l'ouvrant de l'un des avant-bras contre au moins l'une desdites butées ; et une position désactivée dans laquelle la butée mobile est hors du rayon d'action de l'avant-bras ;
- la porte présente une position prédéterminée dans laquelle la première butée est disposée entre l'ouvrant et le premier avant-bras, la deuxième butée est disposée entre l'ouvrant et le deuxième avant-bras, la troisième butée est disposée entre le premier avant-bras et le deuxième avant-bras, et la butée mobile est en position activée et disposée entre l'ouvrant et le premier avant-bras ;
- la butée mobile est activée et désactivée par une ferrure de guidage disposée sur le premier bras de manipulation de sorte que, lorsque la porte est dans ladite position prédéterminée, la butée mobile : est activée par une rotation mutuelle dans un sens de rotation du premier bras de manipulation par rapport au premier avant-bras ; est désactivée par une rotation mutuelle dans l'autre sens de rotation du premier bras de manipulation par rapport au premier avant-bras ;
- la butée mobile est montée rotative sur un socle solidaire de l'ouvrant et comporte un premier bras munis d'un premier élément de contact et un deuxième bras muni d'un deuxième élément de contact, le deuxième élément de contact étant disposé à l'écart d'une surface de butée solidaire du premier avant-bras lorsque le premier élément de contact est déplacé par la ferrure de guidage ;
- la butée mobile comporte un élément élastique de rappel sollicitant la butée mobile vers une position de repos contre le socle ;
- le mécanisme de verrouillage/déverrouillage comporte des moyens entrainant un mouvement relatif du premier bras de manipulation et de l'ouvrant ;
- le mécanisme de verrouillage/déverrouillage comporte une piste de guidage et un doigt d'actionnement dont l'un est solidaire du premier bras de manipulation et l'autre est solidaire de l'ouvrant, le parcours du doigt d'actionnement dans la piste de guidage entrainant un mouvement relatif du premier bras de manipulation et de l'ouvrant ;
- la porte est mobile entre : une configuration de verrouillage/déverrouillage dans laquelle le dispositif de maintien est en position de déblocage et le doigt d'actionnement est captif de la piste de guidage ; une configuration d'ouverture dans laquelle le dispositif de maintien est en position de blocage et le doigt d'actionnement est libéré de la piste de guidage ;
- la porte comprend des butées de porte et des butées de cadre adaptées à verrouiller latéralement l'ouvrant sur le cadre de porte, la porte étant adaptée au verrouillage et déverrouillage par mouvements latéraux de l'ouvrant par rapport au cadre de porte.

### PRÉSENTATION DES FIGURES

D'autres caractéristiques et avantages de l'invention ressortiront de la description non limitative qui suit, en référence aux dessins annexés dans lesquels :
[Fig.1] La figure 1 illustre schématiquement une porte d'aéronef selon l'invention, en position fermée ;
[Fig.2] La figure 2 illustre schématiquement une première étape d'une séquence d'ouverture de la porte de la figure 1 ;
[Fig.3] La figure 3 illustre schématiquement une deuxième étape d'une séquence d'ouverture de la porte de la figure 1 ;
[Fig.4] La figure 4 illustre schématiquement une troisième étape d'une séquence d'ouverture de la porte de la figure 1 ;
[Fig.5] La figure 5 illustre schématiquement une quatrième étape d'une séquence d'ouverture de la porte de la figure 1 ;
[Fig.6] La figure 6 illustre schématiquement une cinquième étape d'une séquence d'ouverture de la porte de la figure 1 ;
[Fig.7] La figure 7 est une vue générale d'une porte d'aéronef selon l'invention ;
[Fig.8] La figure 8 est une vue schématique illustrant le fonctionnement de la porte selon l'invention, dans une première position ;
[Fig.9] La figure 9 est une vue schématique illustrant le fonctionnement de la porte selon l'invention, dans une deuxième position ;
[Fig.10] La figure 10 est une vue schématique illustrant le fonctionnement de la porte selon l'invention, dans une troisième position ;
[Fig.11] La figure 11 est une vue schématique illustrant le fonctionnement de la porte selon l'invention, dans une quatrième position ;
[Fig.12] La figure 12 est une illustration schématique du dispositif de verrouillage/déverrouillage d'une porte selon l'invention ;
[Fig.13] La figure 13 est une vue de détail de la figure 7 ;
[Fig.14] La figure 14 est une vue de dessous des éléments de la figure 13, dans une première position ;
[Fig.15] La figure 15 est une vue de dessous des éléments de la figure 13, dans une deuxième position ;
[Fig.16] La figure 16 est une vue agrandie de la butée mobile de la porte de la figure 7 ;
[Fig.17] La figure 17 est une vue de dessus des éléments de la figure 13, dans une première position ;
[Fig.18] La figure 18 est une vue de dessus des éléments de la figure 13, dans une deuxième position ;
[Fig.19] La figure 19 est une vue de dessus des éléments de la figure 13, dans une troisième position.

### DESCRIPTION DÉTAILLÉE

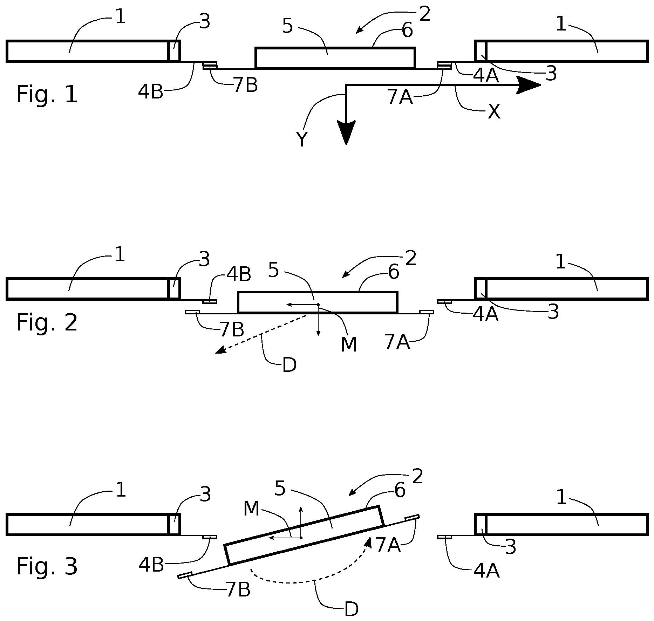

Les figures 1 à 6 sont des figures schématiques illustrant le mouvement d'une porte d'aéronef selon l'invention. Cette porte d'aéronef présente un fonctionnement dit « à échappement latéral » ce qui signifie que la porte se déverrouille grâce à des mouvements latéraux de l'ouvrant permettant le dégagement des butées de porte par rapport aux butées de cadre. Ces mouvements latéraux sont ici défini comme des mouvements selon une direction longitudinale X parallèle à l'axe longitudinal de l'aéronef.

Les figures 1 à 6 illustrent schématiquement les opérations permettant l'ouverture de la porte d'aéronef. La fermeture de cette porte d'aéronef se déroule par les mêmes opérations réalisées dans l'ordre inverse.

La figure 1 schématise une portion de fuselage 1 d'un aéronef ainsi qu'une porte 2. La porte 2 comprend un dormant constitué ici d'un cadre de porte 3 qui est fixé sur le fuselage 1 et qui est muni de butées 4 de cadre. La porte 2 comprend également un ouvrant 5 qui est muni d'une paroi externe 6 tournée vers l'extérieur de l'aéronef, ainsi que de butées 7 de porte.

Sur cette vue schématique de la figure 1, la portion de fuselage 1 et la porte 2 sont vues de dessus, en coupe selon un plan horizontal. La flèche X sur la figure 1 illustre l'axe longitudinal de l'aéronef, et pointe vers l'avant de l'aéronef. La flèche Y illustre l'axe transversal de l'aéronef et est pointée vers l'intérieur de l'aéronef. Les butées de cadre comportent ainsi des butées avant 4A de cadre des butées arrière 4B de cadre. De même, les butées de porte comprennent des butées 7A avant de porte et des butées 7B arrière de porte.

Dans la position de la figure 1, la porte 2 est en position de fermeture, l'ouvrant 5 obturant le cadre 3 de porte, cette fermeture étant verrouillée par la sollicitation des butées 7 de porte contre les butées 4 de cadre, par un contact plan sur plan. Cette position verrouillée permet le vol de l'aéronef.

À partir de cette position de fermeture de la figure 1, le procédé d'ouverture de la porte 2 est illustré en référence aux figures 2 à 6. Sur ces figures, le déplacement de l'ouvrant est indiqué par les flèches D et les composantes de l'action qui est transmise à l'ouvrant 5 par le mécanisme de verrouillage/déverrouillage, et qui permet le déplacement D, est indiqué par le repère M.

Un premier mouvement, illustré à la figure 2 et commandé par le mécanisme de verrouillage/déverrouillage, entraine l'ouvrant 5 vers l'intérieur de l'aéronef et vers l'arrière. Les butées 7 de porte se trouvent ainsi à l'écart des butées 4 de cadre selon la direction transversale Y. De plus, les butées avant 7A de porte sont dégagées des butées avant 4A de cadre, c'est-à-dire que les butées avant 7A de porte ne sont plus en vis-à-vis des butées avant 4A de cadre, les butées avant 4A de cadre n'empêchant donc plus un déplacement des butées avant 7A de porte vers l'extérieur de l'aéronef. Ce déplacement D de l'ouvrant est possible grâce à des efforts transmis à l'ouvrant par le mécanisme de verrouillage/déverrouillage selon les deux directions M.

À la suite d'un deuxième déplacement D illustré à la figure 3, l'ouvrant 5 est pivoté autour d'un axe vertical de sorte que les butées avant 7A de porte sont déplacées vers l'extérieur de l'aéronef, au-delà du niveau des butées avant 4A de cadre. Ce déplacement D de l'ouvrant en rotation est possible grâce à des efforts transmis à l'ouvrant par le mécanisme de verrouillage/déverrouillage selon les deux directions M.

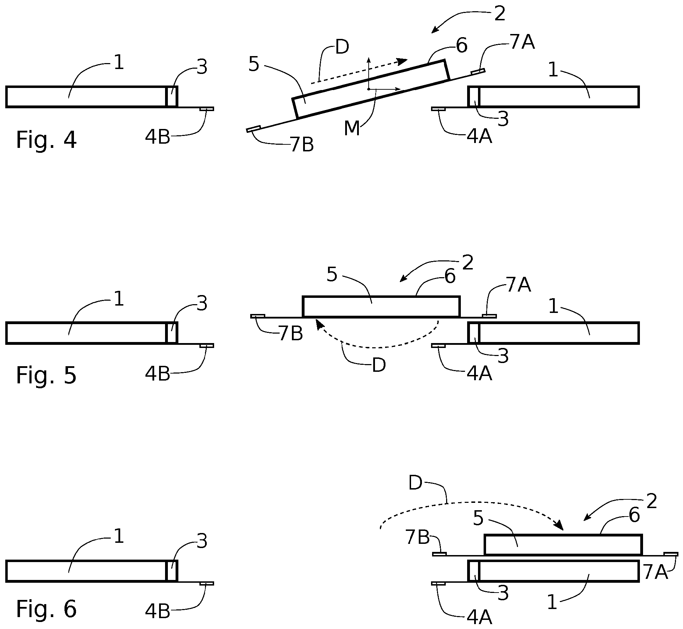

À la suite d'un troisième déplacement D illustré à la figure 4, l'ouvrant 5 est ensuite translaté vers l'avant dans son propre plan, c'est-à-dire que l'ouvrant 5 subit une translation le long d'une direction s'étendant entre une butée arrière 7B et une butée avant 7A. Ce déplacement D permet alors de dégager les butées arrière 7B de porte par rapport aux butées arrière 4B de cadre. Les butées 7B de porte ne sont plus en face des butées 4B de cadre et le mouvement de l'ouvrant 5 vers l'extérieur de l'aéronef n'est plus entravé par aucune butée. Ce déplacement D de l'ouvrant en rotation est possible grâce à des efforts transmis à l'ouvrant par le mécanisme de verrouillage/déverrouillage selon les deux directions M.

Dans un quatrième déplacement D illustré à la figure 5, l'ouvrant 5 subit une rotation autour d'un axe vertical de sorte qu'il retrouve une orientation parallèle au fuselage 1. Ce mouvement de rotation ne nécessite ici pas de transmission d'efforts de la part du mécanisme de verrouillage/déverrouillage, car il ne nécessite pas de mouvement du bras de support de la porte. Ce mouvement de rotation peut être réalisé par un dispositif permettant l'orientation de la porte, tel qu'un bras de pivotement décrit plus loin.

Lors d'un dernier déplacement D d'ouverture, illustré à la figure 6, l'ouvrant 5 est entraîné selon une translation circulaire venant positionner l'ouvrant 5 contre le fuselage 1, en maintenant l'ouvrant 5 parallèle au fuselage 1 et en dégageant complètement le cadre 3 pour permettre l'accès à l'aéronef. Dans la position de la figure 6, la porte d'aéronef est en position d'ouverture.

Le procédé permettant la fermeture de la porte 2 se déroule en sens inverse depuis la position de la figure 6 jusqu'à la position de la figure 1.

L'ouverture et la fermeture de la porte 2 ainsi que les opérations correspondantes de verrouillage et de déverrouillage des butées 4, 7 sont réalisées uniquement avec des opérations : de translations latérales de l'ouvrant 5 (suivant l'axe X) ; de translations transversales (suivant l'axe Y) de l'ouvrant 5 ; et de rotations de l'ouvrant 5 autour d'un axe vertical. L'ouvrant 5 est mobile uniquement dans un plan horizontal, l'ouvrant 5 étant fixe dans la direction verticale.

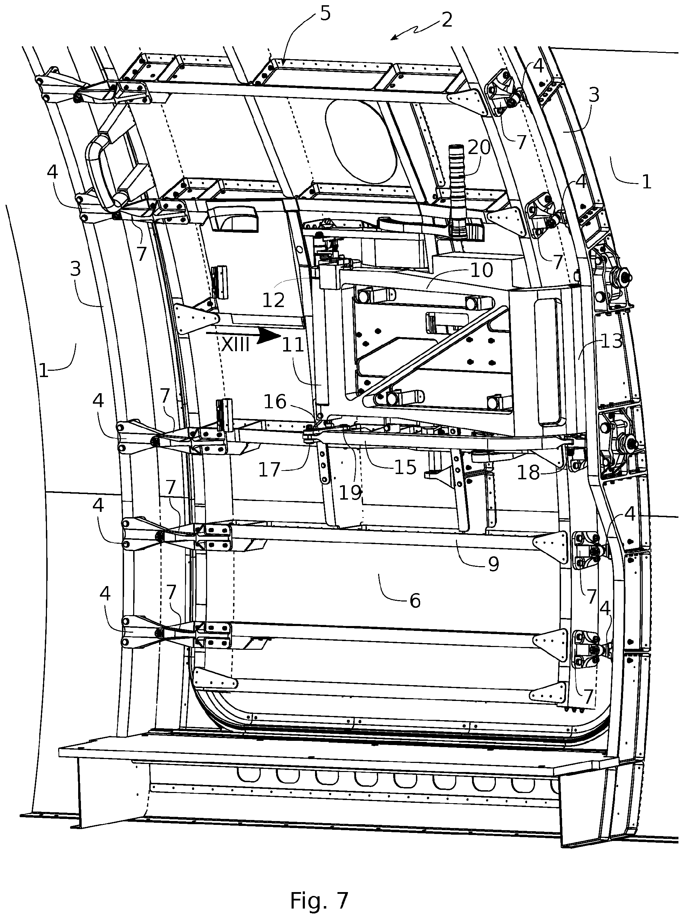

La figure 7 représente la porte d'aéronef 2 en position de fermeture (position de la figure 1) et vue depuis l'intérieur de l'aéronef.

Le cadre 3 de porte est représenté fixé au fuselage 1, les butées 4 de cadre étant boulonnées sur deux montants latéraux du cadre 3 de porte.

L'ouvrant 5 comprend une structure de porte 9 composée généralement de poutres et de longerons. La paroi externe 6 de l'ouvrant 5 est fixée sur la structure de porte 9. Les butées 7 de porte sont également boulonnées sur la structure de porte 9.

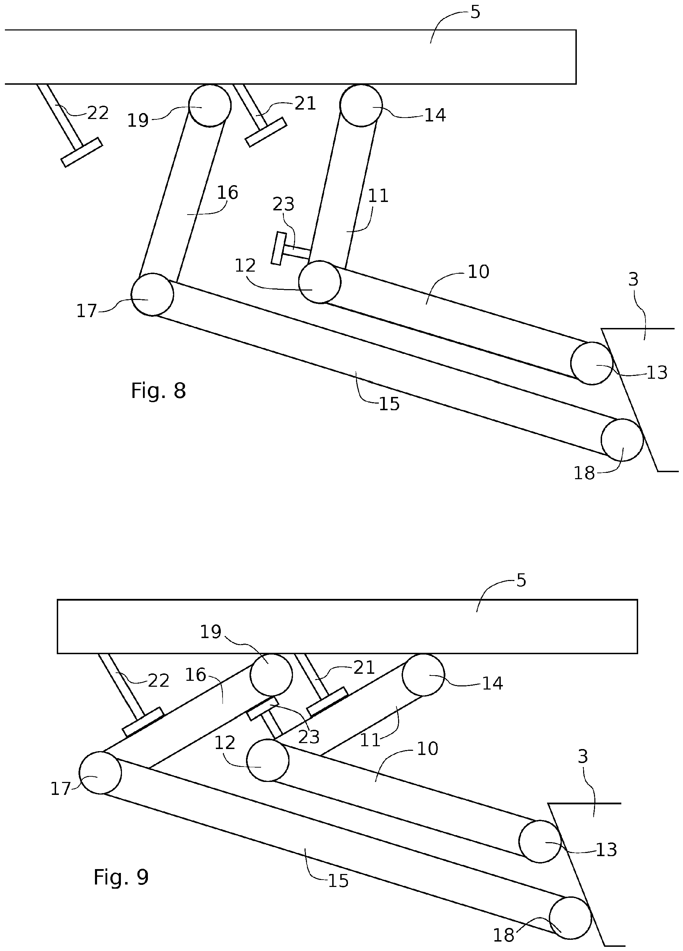

Les moyens permettant à la porte 2 de réaliser les mouvements décrits aux figures 1 à 6 sont ici uniquement constitués de bras et de liaisons pivot. La porte 2 comprend ainsi un premier bras de manipulation 10 et un premier avant-bras 11 reliés entre eux par une liaison pivot 12. Le premier bras de manipulation 10 est ici constitué d'une structure porteuse faite d'une seule pièce ou de poutres assemblées pour supporter le poids de l'ouvrant 5. Le premier bras de manipulation 10 est monté sur le cadre 3 de porte par une liaison pivot 13. Le premier avant-bras 11, qui est seulement partiellement visible sur cette figure 7, est également relié à l'ouvrant 5 par une liaison pivot 14 (non visible sur la figure 7 mais visible notamment sur les figures 8 à 11).

La porte 2 comprend également un deuxième bras de manipulation 15 et un deuxième avant-bras 16 qui sont reliés entre eux par une liaison pivot 17. Le deuxième bras de manipulation 15 est relié au cadre 3 de porte par une liaison pivot 18. Le deuxième avant-bras 16 est relié à l'ouvrant 5 par une liaison pivot 19.

Les liaisons pivot 12, 13, 14, 17, 18, 19 peuvent être réalisées par tout moyen approprié tel que paliers, roulements, bagues antifriction, etc.

Le premier bras de manipulation 10 et le premier avant-bras 11 présentent un dimensionnement plus important que le deuxième bras de manipulation 15 et le deuxième avant-bras 16 car le premier bras de manipulation 10 et le premier avant-bras de manipulation 11 sont, dans cet exemple, prévus pour supporter l'ensemble du poids de l'ouvrant 5. Indépendamment de leur dimensionnement, le premier bras de manipulation 10, le premier avant-bras 11, le deuxième bras de manipulation 15 et le deuxième avant-bras 16 remplissent une fonction géométrique d'articulation de l'ouvrant 5 permettant les manoeuvres de verrouillage et déverrouillage, d'ouverture et de fermeture.

La porte 2 comprend également un levier 20 permettant d'actionner un dispositif de verrouillage/déverrouillage qui entraine l'ouvrant 5 en mouvement entre ses positions des figures 1 à 5.

Les figures 8 à 11 sont des vues schématiques illustrant le comportement de l'agencement géométrique réalisé par les bras de manipulation 10, 15 et leur avant-bras 11, 16 respectif. Sur ces figures, la porte est schématiquement vue de dessus. Les figures 8 à 11 sont des vues schématiques illustrant simplement l'agencement des composants entre eux et ne définissent aucune cinématique particulière.

Sur la figure 8, l'ouvrant 5 est mobile par rapport au cadre 3 de porte selon les degrés de liberté autorisés par les bras 10, 15 et leurs avant-bras 11, 16 respectifs et de leurs liaisons pivot respectives 12, 13, 14, 17, 18, 19. Cet assemblage permet une grande liberté de mouvement car les deux liaisons pivot 12, 17 qui relient chacun des bras 10, 15 à son avant-bras 11, 16 ne sont ancrées à aucune pièce fixe et peuvent donc être déplacées, en plus d'assurer leur fonction de pivot. Chacun des bras 10, 15 peut donc pivoter autour de sa liaison 13, 18 avec le cadre 3 de porte, selon des angles différents, tandis que les avant-bras 11, 16 peuvent eux-mêmes pivoter autour du bras 10, 15 correspondant.

Une grande variété de positions relatives et d'orientations mutuelles peut ainsi être obtenue pour l'ouvrant 5 par rapport au cadre 3 de porte. Bien que la liberté de mouvement de l'ouvrant 5 ne soit pas absolue car limitée à la combinaison de rotations possibles liées à la position des pivots et aux dimensions des bras et avant-bras, cette liberté de mouvement est suffisante notamment pour réaliser les mouvements de verrouillage et déverrouillage par échappement latéral, décrits en exemple aux figures 1 à 5.

La porte 2 comprend de plus un dispositif de maintien constitué ici de butées adaptée à coopérer avec les bras 10, 15 et les avant-bras 11, 16. Le dispositif de maintien comporte tout d'abord trois butées fixes :
- une première butée 21 fixée sur l'ouvrant 5 et disposée en vis-à-vis du premier avant-bras 11 ;
- une deuxième butée 22 fixée à l'ouvrant 5 et disposée en vis-à-vis du deuxième avant-bras 16 ;
- une troisième butée 23 fixée sur le premier avant-bras 11 et tournée vers le deuxième avant-bras 16.

Ce dispositif de maintien est prévu pour immobiliser les deux avant-bras 11, 16 par rapport à l'ouvrant 5 dans une position prédéterminée. Les butées 21, 22, 23 sont dimensionnées en forme et en positionnement pour entrer en contact avec les bras et avant-bras dans cette position prédéterminée.

La figure 9 illustre cette position prédéterminée d'action du dispositif de maintien. La position prédéterminée illustrée à la figure 9 est choisie aléatoirement pour les besoins de l'exposé. Dans cette position prédéterminée de la figure 9, à cette position précise de l'ouvrant 5 par rapport au cadre 3 de porte, l'angle formé par les bras 10, 15 et les avant-bras 11, 16 entre eux et avec l'ouvrant 5, amène le premier avant-bras 11 à venir contre la première butée 21, le deuxième avant-bras 16 à venir contre la deuxième butée 22, et la troisième butée 23 à venir contre le deuxième avant-bras 16.

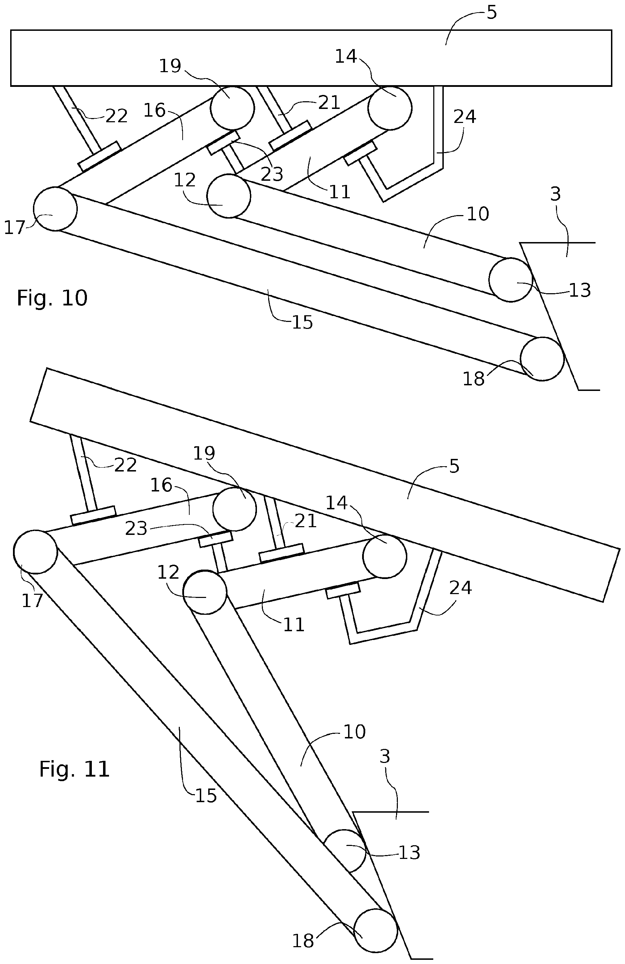

En référence à la figure 10, le dispositif de maintien comporte de plus une quatrième butée 24 qui est mobile. La butée mobile 24 peut être désactivée, c'est à dire escamotée, (c'est le cas sur la figure 9) ou activée (c'est le cas sur la figure 10) par tous moyens mécaniques ou électriques (non représenté sur ces figures 9, 10 schématiques).

L'activation de la butée mobile 24 rend cette butée fixe par rapport à l'ouvrant 5, la butée mobile 24 venant en butée contre le premier avant-bras 11.

Le dispositif de maintien, avec sa butée mobile 24 activée, est ainsi en position de blocage (position de la figure 10) par opposition à sa position de déblocage dans laquelle la butée mobile 24 n'est pas activée (figure 8).

Dans la position de blocage, le premier avant-bras 11 est bloqué entre la butée mobile 24 et la première butée 21 et le deuxième avant-bras 16 est bloqué entre la deuxième butée 22 et la troisième butée 23. Les deux avant-bras 11, 16 sont ainsi immobilisés par rapport à l'ouvrant 5. L'ouvrant 5 est les avant-bras 11, 16 fonctionnent alors comme un ensemble solidaire qui est uniquement articulé par les pivots 12 et 17.

En référence à la figure 11, l'ensemble monobloc formé par l'ouvrant 5 et les avant-bras 11, 16 est donc, dans la position de blocage du dispositif de maintien, articulé de manière classique sur le cadre 3 de porte par un quadrilatère déformable constitué des quatre liaisons pivot 13, 18, 12, 17.

La longueur des bras 10, 15 et la position des pivots est choisie en fonction du mouvement souhaité pour l'ouvrant 5 par rapport au cadre 3 de porte. Notamment, dans cette position de blocage du dispositif de maintien, le choix est fait pour un mouvement de translation circulaire permettant, dans le présent exemple, à l'ouvrant 5 de passer de sa position déverrouillée de la figure 5 à sa position d'ouverture de la figure 6.

Dans un mode de réalisation particulièrement avantageux et dans le cas de l'exemple de déverrouillage par échappement latéral décrit aux figures 1 à 6, le dispositif de maintien est, selon une phase de verrouillage/déverrouillage, en position de déblocage durant toutes les positions illustrées de la figure 1 à la figure 5, ce qui permet à l'ouvrant 5 les différentes rotations et translations permettant son déverrouillage. À partir de la position de déverrouillage de la figure 5, le dispositif de maintien passe en mode de blocage et l'ouvrant 5 peut alors être entraîné, généralement manuellement, à effectuer le mouvement de translation circulaire le conduisant à la position d'ouverture de la figure 6, selon une phase d'ouverture.

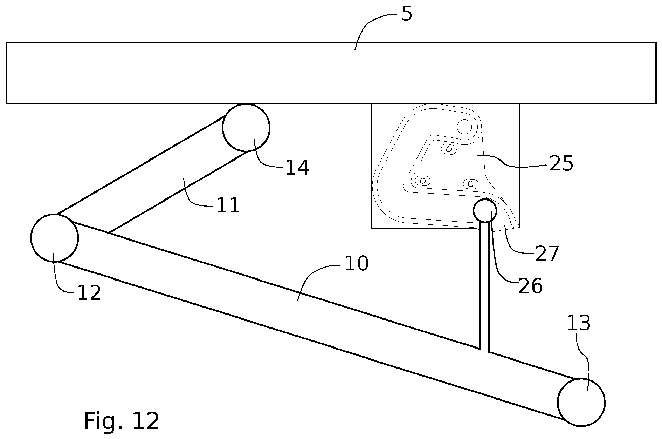

Pour permettre les mouvements de l'ouvrant 5 lors de la phase de verrouillage/déverrouillage, le mécanisme de verrouillage/déverrouillage comporte de préférence des moyens entrainant un mouvement relatif du premier bras de manipulation 10 et de l'ouvrant 5. La figure 12 est une vue schématique représentant ces moyens couplés au premier bras 10.

En référence à la figure 10, le mécanisme de verrouillage/déverrouillage comporte une piste de guidage 25 et un doigt d'actionnement 26 (par exemple, un galet) adapté à parcourir cette piste de guidage 25. Le doigt d'actionnement 26 est solidaire du bras 10 et la piste de guidage 25 est solidaire de l'ouvrant 5, ou inversement, de sorte que le parcours du doigt d'actionnement 26 le long de la piste de guidage 25 entraine les mouvements mutuels souhaités entre l'ouvrant 5 et le bras 10. L'ouvrant 5 est ainsi entraîné dans son mouvement de déverrouillage par les mouvements d'échappement latéraux décrits en exemple aux figures 1 à 5.

La piste de guidage 25 comporte une ouverture 27 par laquelle le doigt d'actionnement 26 est libre de quitter la piste de guidage 25 à partir de la position déverrouillée de la figure 5.

La porte est ainsi adaptée à présenter :
- une configuration de verrouillage/déverrouillage dans laquelle le dispositif de maintien est en position de déblocage et le doigt d'actionnement 26 est captif de la piste de guidage de sorte que l'entrainement du doigt d'actionnement 26 à parcourir la piste de guidage 25 entraine l'ouvrant 5 à effectuer les mouvements nécessaires à son verrouillage ou son déverrouillage ;
- une configuration d'ouverture dans laquelle le dispositif de maintien est en position de blocage et le doigt d'actionnement 26 a quitté la piste de guidage 25 par l'ouverture 27, de sorte que l'ouvrant 5 n'est plus entraîné en mouvement par le doigt d'actionnement 26 et peut alors notamment être déplacé manuellement par une articulation en quadrilatère déformable comme décrit plus haut (mouvement montré à la figure 6).

Le parcours du doigt d'actionnement 26 dans la piste de guidage 25 peut être entraîné par tout moyen tel que, par exemple, une fourchette rotative.

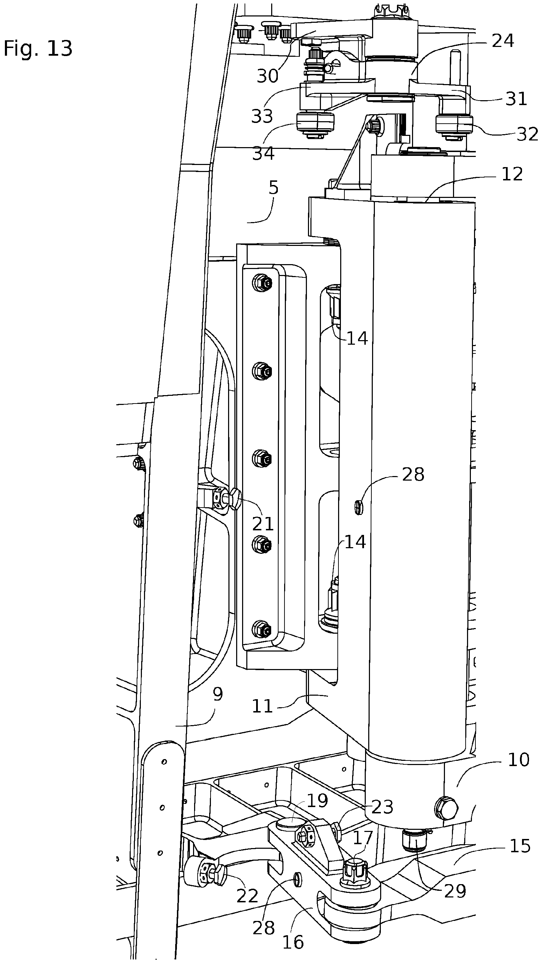

Les figures 13 à 19 illustrent un mode de réalisation du positionnement des quatre butées 21, 22, 23, 24 du dispositif de maintien dans l'exemple de porte représentée à la figure 7. La figure 13 est une vue en perspective agrandie de la zone désignée par la flèche XIII de la figure 7. Sur cette figure 13, l'extrémité du premier bras de manipulation 10 est visible, au niveau du pivot 12, ainsi que le premier avant-bras 11 et son pivot 14 le reliant à l'ouvrant 5.

Sous le premier bras de manipulation 10, l'extrémité du deuxième bras de manipulation 15 est visible ainsi que le deuxième avant-bras 16 et leur pivot 17 mutuel. La liaison pivot 19 de liaison du deuxième avant-bras 16 à l'ouvrant 5 est également visible.

La première butée 21 est ici disposée sur l'ouvrant 5 en vis-à-vis du premier avant-bras 11. La deuxième butée 22 est également disposée sur l'ouvrant 5 en vis-à-vis du deuxième avant-bras 16. La troisième butée 23 est disposée sur un support monté sur le deuxième avant-bras 16 et tournée vers le premier avant-bras 11.

Chacune des butées 21, 22, 23 est ici constituée d'une vis permettant d'affiner le réglage de sa position. La première butée 21 et la deuxième butée 22 sont prévues pour coopérer avec une pastille élastique 28 permettant d'amortir le choc de la butée 21, 22 contre la pièce correspondante. Les positions d'une butée et de sa pastille correspondante peuvent être inversées.

La troisième butée 23 est prévue pour venir coopérer contre un tampon 29 tournant dans le même axe que la liaison pivot 12. Le tampon 29 se trouvant sur la liaison pivot 12, cette position correspond à l'extrémité du premier avant-bras 11. La troisième butée 23, en venant contre le tampon 29, immobilise ainsi le rapprochement du premier avant-bras 11 et du deuxième avant bras 16.

Sur la figure 13, la butée mobile 24 est visible sur le dessus du premier avant-bras 11. La butée mobile 24 est montée mobile en rotation sur un socle solidaire de l'ouvrant 5.

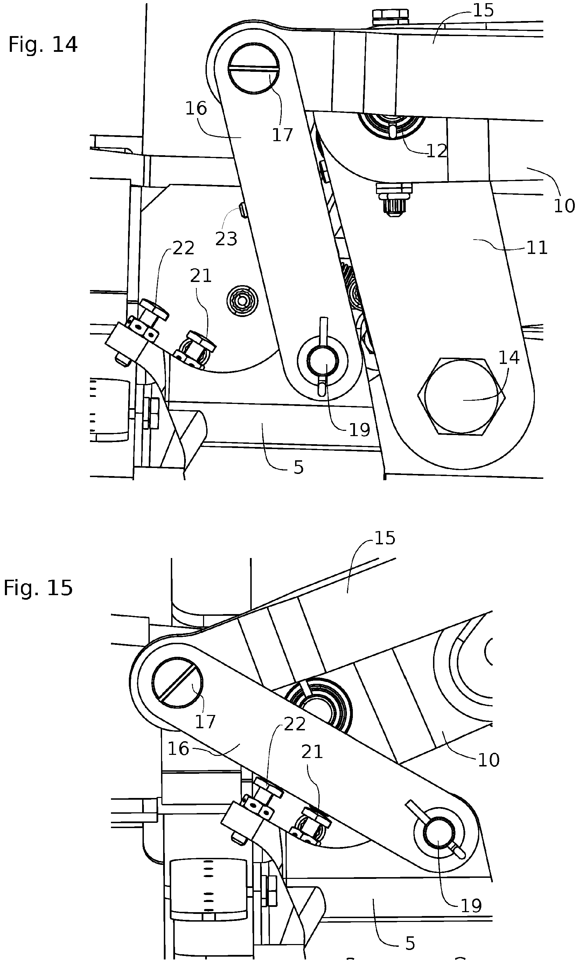

Les figures 14 et 15 sont des vues de dessous de la figure 13 pour deux positions différentes.

La figure 14 représente les éléments de la figure 13 lorsque la porte est en phase de verrouillage/déverrouillage (correspondant à la vue schématique de la figure 8). La figure 14 montre notamment la première butée 21 et la deuxième butée 22, la troisième butée 23 n'étant que partiellement visible.

La figure 15 représente les éléments de la figure 13 lorsque la porte est dans sa position de déverrouillage (correspondant à la figure 5 et à la vue schématique de la figure 9), prête à être déplacée vers sa position d'ouverture de la figure 6. Le premier avant-bras 11 est ainsi disposé contre la première butée 21, le deuxième avant-bras 16 est disposé contre la deuxième butée 22, et la troisième butée 23 est disposée contre le premier avant-bras 11.

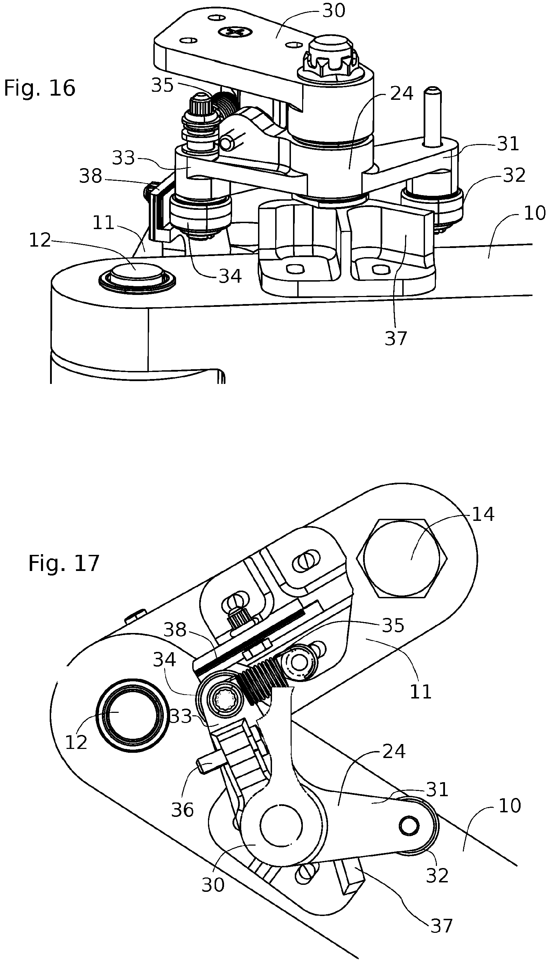

La butée mobile 24 est montée sur un socle solidaire de l'ouvrant 5, montée mobile en rotation (en référence à la figure 16).

La figure 16 est une vue agrandie de la figure 13 montrant la butée mobile 24. La figure 17 est une vue de dessus de la figure 16. La butée mobile 24 est montée tournante sur le socle 30 qui est solidaire de l'ouvrant 5, et comprend un premier bras transversal 31 muni à son extrémité d'un élément de contact constitué ici d'un premier galet 32, et un deuxième bras transversal 33 muni à son extrémité d'un élément de contact constitué ici d'un deuxième galet 34.

La butée mobile 24 comporte un élément élastique de rappel constitué ici d'un ressort 35 qui sollicite la butée mobile 24 vers une position de repos dans laquelle une tête de vis 36 réglable vient au contact d'une surface d'arrêt du socle 30.

La butée mobile 24 est adaptée à coopérer, par son premier bras 31 avec une ferrure de guidage 37 fixé sur le premier bras 10 et, par son deuxième bras 33, avec une surface de butée 38 fixée sur le premier avant-bras 11. Dans la position des figures 16 et 17, la butée mobile 24 est en position activée, le deuxième galet 34 étant disposé contre la surface de butée 38.

L'immobilisation du premier avant-bras 11 par rapport à l'ouvrant 5 est réalisée par le deuxième galet 34 qui est solidaire, dans cette position activée de la butée mobile 24, de l'ouvrant 5 par l'intermédiaire du socle 30.

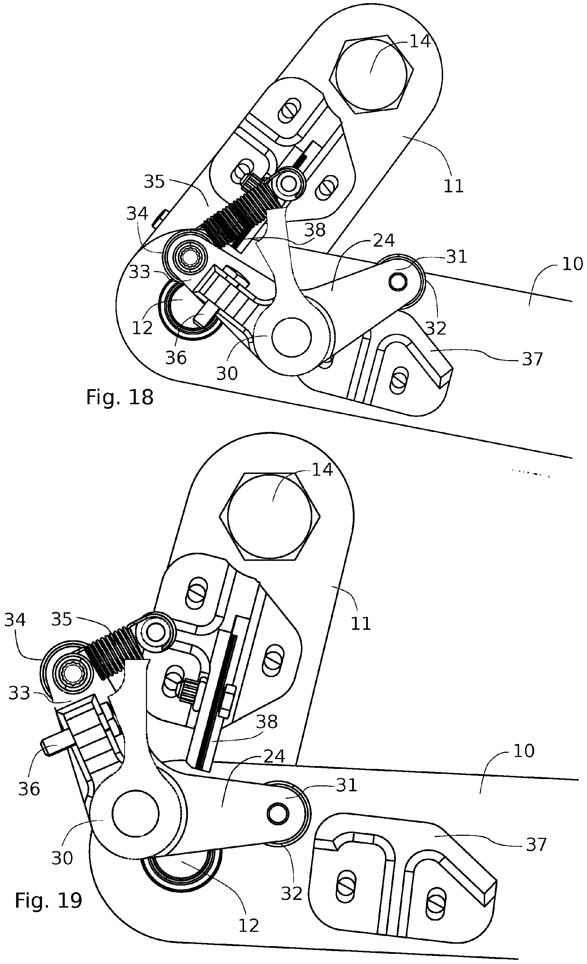

La figure 18 illustre la position de la butée mobile 24 lorsque la porte arrive à sa position de déverrouillage. Dans cette position, le deuxième galet 34 échappe à la surface de butée 38. La butée mobile 24 est ici conçue pour passer automatiquement en position désactivée ou en position activée en approchant ou en quittant la position de déverrouillage (correspondant à la figure 6 et à la figure 9). L'emplacement de la ferrure de guidage 37 et du socle 30 sur l'ouvrant 5 sont choisis pour que, lorsque la porte approche de sa position de déverrouillage, la ferrure de guidage 37 repousse le premier galet 32 et entraine en rotation la butée mobile 24 à l'encontre de son ressort de rappel 35.

La figure 18 illustre la position de la butée mobile 24 lorsque la porte est dans sa position de déverrouillage. Dans cette position, le deuxième galet 34 échappe à la surface de butée 38.

À partir de la position de la figure 18, si un mouvement de pivotement mutuel entre le premier bras 10 et le premier avant-bras 11 tend à ouvrir l'angle qu'ils forment, la butée mobile 24 passe alors dans sa configuration représentée à la figure 19 dans laquelle la butée mobile 24 est désactivée car le deuxième galet 34 est hors du rayon d'action de la surface de butée 38. Cette position correspond à la phase de verrouillage/déverrouillage de la porte et permet une rotation libre du premier avant-bras 11 par rapport à l'ouvrant 5. Le premier avant-bras 11 étant ainsi libre, le deuxième avant-bras 16 l'est aussi car il n'est plus alors sollicité contre ses butées.

À l'inverse, si à partir de la position de déverrouillage de la figure 18, un pivotement mutuel du premier bras 10 et du premier avant-bras 11 tendant à fermer l'angle qu'ils forment, la butée passe alors en position activée correspondant à la figure 17.

Un procédé d'ouverture de la porte comprend donc une première phase de déverrouillage dans laquelle le dispositif de maintien est en position de déblocage, et une deuxième phase d'ouverture dans laquelle le dispositif de maintien est en position de blocage, le dispositif de maintien passant automatiquement en position de blocage lors de la transition ente la première phase et la deuxième phase, au moment de la position de déverrouillage. Un procédé de fermeture de la porte se déroule de manière identique, en sens inverse.

Des variantes de réalisation de la porte d'aéronef peuvent être mises en oeuvre sans sortir du cadre de l'invention. Par exemple, la position des butées et des surfaces d'arrêt correspondantes peut être inversée. La première butée 21 peut être par exemple fixée sur le premier avant-bras 11 et venir en butée contre l'ouvrant 5 lors de la position de déverrouillage. Il en va de même pour les autres butées.

L'ouvrant 5 peut par ailleurs être déplacé relativement à l'un des bras de manipulation, ou aux deux, par tout dispositif tel que rampes, galets, cames, piste de guidage, etc.

## Revendications

1. Porte d'aéronef comportant :
- un ouvrant (5) ;
- un dormant comprenant un cadre (3) de porte destiné à être fixé sur le fuselage de l'aéronef ;
- un mécanisme de verrouillage/déverrouillage de la porte adapté à déplacer l'ouvrant (5) par rapport au cadre (3) de porte ;
- un premier bras de manipulation (10) et un premier avant-bras (11) reliés entre eux par une liaison pivot (12), le premier bras de manipulation (10) étant relié au cadre (3) de porte par une liaison pivot (13) et le premier avant-bras (11) étant relié à l'ouvrant (5) par une liaison pivot (14) ;
- un deuxième bras de manipulation (15) et un deuxième avant-bras (16) reliés entre eux par une liaison pivot (17), le deuxième bras de manipulation (15) étant relié au cadre (3) de porte par une liaison pivot (18) et le deuxième avant-bras (16) étant relié à l'ouvrant (5) par une liaison pivot (19) ;
cette porte d'aéronef étant **caractérisée en ce qu'**elle comporte :
- un dispositif de maintien, mobile entre : une position de blocage dans laquelle le premier avant-bras (11) et le deuxième avant-bras (16) sont immobilisés par rapport à l'ouvrant (5) ; et une position de déblocage dans laquelle le premier avant-bras (11) et le deuxième avant-bras (16) sont libres de pivoter par rapport à l'ouvrant (5) selon au moins un sens de rotation.

2. Porte d'aéronef selon la revendication 1, **caractérisée en ce que** le dispositif de maintien comporte une première butée (21) et une deuxième butée (22) adaptées à immobiliser la rotation du premier avant-bras (11) et du deuxième avant-bras (16) par rapport à l'ouvrant (5) dans un sens de rotation.

3. Porte d'aéronef selon la revendication 2 **caractérisée en ce que** le dispositif de maintien comporte une troisième butée (23) adaptée à empêcher le rapprochement des deux avant-bras (11,16).

4. Porte d'aéronef selon la revendication 3, **caractérisée en ce que** le dispositif de maintien comporte une butée (24) mobile entre : une position activée dans laquelle la butée mobile (24) verrouille la position par rapport à l'ouvrant (5) de l'un des avant-bras contre au moins l'une desdites butées ; et une position désactivée dans laquelle la butée mobile (24) est hors du rayon d'action de l'avant-bras.

5. Porte d'aéronef selon la revendication 4, **caractérisée en ce qu'**elle présente une position prédéterminée dans laquelle la première butée (21) est disposée entre l'ouvrant (5) et le premier avant-bras (11), la deuxième butée (22) est disposée entre l'ouvrant (5) et le deuxième avant-bras (16), la troisième butée (23) est disposée entre le premier avant-bras (11) et le deuxième avant-bras (16), et la butée mobile (24) est en position activée et disposée entre l'ouvrant (5) et le premier avant-bras (11).

6. Porte d'aéronef selon la revendication 5, **caractérisée en ce que** la butée mobile (24) est activée et désactivée par une ferrure de guidage (37) disposée sur le premier bras de manipulation (10) de sorte que, lorsque la porte est dans ladite position prédéterminée, la butée mobile (24) :
- est activée par une rotation mutuelle dans un sens de rotation du premier bras de manipulation (10) par rapport au premier avant-bras (11) ;
- est désactivée par une rotation mutuelle dans l'autre sens de rotation du premier bras de manipulation (10) par rapport au premier avant-bras (11).

7. Porte d'aéronef selon la revendication 6, **caractérisée en ce que** la butée mobile (24) est montée rotative sur un socle (30) solidaire de l'ouvrant (5) et comporte un premier bras (31) munis d'un premier élément de contact (32) et un deuxième bras (33) muni d'un deuxième élément de contact (34), le deuxième élément de contact (34) étant disposé à l'écart d'une surface de butée (38) solidaire du premier avant-bras (11) lorsque le premier élément de contact (32) est déplacé par la ferrure de guidage (37).

8. Porte d'aéronef selon la revendication 7, **caractérisée en ce que** la butée mobile (24) comporte un élément élastique de rappel (35) sollicitant la butée mobile (24) vers une position de repos contre le socle (30).

9. Porte d'aéronef selon l'une quelconque des revendications précédentes, **caractérisée en ce que** le mécanisme de verrouillage/déverrouillage comporte des moyens entrainant un mouvement relatif du premier bras de manipulation (10) et de l'ouvrant (5).

10. Porte d'aéronef selon la revendication 9, **caractérisée en ce que** le mécanisme de verrouillage/déverrouillage comporte une piste de guidage (25) et un doigt d'actionnement (26) dont l'un est solidaire du premier bras de manipulation (10) et l'autre est solidaire de l'ouvrant (5), le parcours du doigt d'actionnement (26) dans la piste de guidage (25) entrainant un mouvement relatif du premier bras de manipulation (10) et de l'ouvrant (5).

11. Porte d'aéronef selon la revendication 10, **caractérisée en ce que** la porte est mobile entre :
- une configuration de verrouillage/déverrouillage dans laquelle le dispositif de maintien est en position de déblocage et le doigt d'actionnement (26) est captif de la piste de guidage (25) ;
- une configuration d'ouverture dans laquelle le dispositif de maintien est en position de blocage et le doigt d'actionnement (26) est libéré de la piste de guidage (25).

12. Porte d'aéronef selon la revendication 11, **caractérisée en ce qu'**elle comporte des butées (7) de porte et des butées (4) de cadre adaptées à verrouiller latéralement l'ouvrant (5) sur le cadre (3) de porte, la porte étant adaptée au verrouillage et déverrouillage par mouvements latéraux de l'ouvrant (5) par rapport au cadre (3) de porte.

13. Procédé d'ouverture d'une porte d'aéronef conforme à l'une des revendications 1 à 12, **caractérisé en ce qu'**il comporte :
- une première phase de déverrouillage dans laquelle le dispositif de maintien est en position de déblocage ;
- une deuxième phase d'ouverture dans laquelle le dispositif de maintien est en position de blocage.

14. Procédé d'ouverture selon la revendication 13, **caractérisé en ce que**, entre la phase de déverrouillage et la phase d'ouverture, l'ouvrant (5) passe par une position prédéterminée dans laquelle le dispositif de maintien passe en position de blocage par le rappel, face à une surface de butée (38) solidaire du premier avant-bras (11), d'une butée mobile (24) solidaire de l'ouvrant (5) et actionnée par une ferrure de guidage (37) solidaire du premier bras de manipulation (10).

## Patentansprüche

1. Luftfahrzeugtür, umfassend:
- einen Flügel (5);
- eine Zarge mit einem Türrahmen (3), der dazu bestimmt ist, am Rumpf des Luftfahrzeugs befestigt zu sein;
- einen Mechanismus zum Verriegeln/Entriegeln der Tür, der dazu geeignet ist, den Flügel (5) relativ zum Türrahmen (3) zu bewegen;
- einen ersten Betätigungsarm (10) und einen ersten Unterarm (11), die durch eine Schwenkverbindung (12) miteinander verbunden sind, wobei der erste Betätigungsarm (10) über eine Schwenkverbindung (13) mit dem Türrahmen (3) verbunden ist und der erste Unterarm (11) über eine Schwenkverbindung (14) mit dem Flügel (5) verbunden ist;
- einen zweiten Betätigungsarm (15) und einen zweiten Unterarm (16), die über eine Schwenkverbindung (17) miteinander verbunden sind, wobei der zweite Betätigungsarm (15) über eine Schwenkverbindung (18) mit dem Türrahmen (3) verbunden ist und der zweite Unterarm (16) über eine Schwenkverbindung (19) mit dem Flügel (5) verbunden ist;
wobei die Luftfahrzeugtür **dadurch gekennzeichnet ist, dass** sie Folgendes aufweist:
- eine Haltevorrichtung, die beweglich ist zwischen: einer Blockierposition, in der der erste Unterarm (11) und der zweite Unterarm (16) relativ zum Flügel (5) unbeweglich sind; und einer Freigabeposition, in der der erste Unterarm (11) und der zweite Unterarm (16) relativ zum Flügel (5) in zumindest einer Drehrichtung frei schwenkbar sind.

2. Luftfahrzeugtür nach Anspruch 1, **dadurch gekennzeichnet, dass** die Haltevorrichtung einen ersten Anschlag (21) und einen zweiten Anschlag (22) aufweist, die dazu geeignet sind, die Drehung des ersten Unterarms (11) und des zweiten Unterarms (16) relativ zum Flügel (5) in einer Drehrichtung zu fixieren.

3. Luftfahrzeugtür nach Anspruch 2, **dadurch gekennzeichnet, dass** die Haltevorrichtung einen dritten Anschlag (23) aufweist, der dazu geeignet ist, die Annäherung der beiden Unterarme (11, 16) zu verhindern.

4. Luftfahrzeugtür nach Anspruch 3, **dadurch gekennzeichnet, dass** die Haltevorrichtung einen Anschlag (24) aufweist, der beweglich ist zwischen: einer aktivierten Position, in der der bewegliche Anschlag (24) die Position eines der Unterarme relativ zum Flügel (5) gegen mindestens einen der Anschläge fixiert; und einer deaktivierten Position, in der sich der bewegliche Anschlag (24) außerhalb des Aktionsradius des Unterarms befindet.

5. Luftfahrzeugtür nach Anspruch 4, **dadurch gekennzeichnet, dass** sie eine vorbestimmte Position aufweist, in der der erste Anschlag (21) zwischen dem Flügel (5) und dem ersten Unterarm (11) angeordnet ist, wobei der zweite Anschlag (22) zwischen dem Flügel (5) und dem zweiten Unterarm (16) angeordnet ist, wobei der dritte Anschlag (23) zwischen dem ersten Unterarm (11) und dem zweiten Unterarm (16) angeordnet ist und der bewegliche Anschlag (24) sich in der aktivierten Position befindet und zwischen dem Flügel (5) und dem ersten Unterarm (11) angeordnet ist.

6. Luftfahrzeugtür nach Anspruch 5, **dadurch gekennzeichnet, dass** der bewegliche Anschlag (24) durch einen am ersten Betätigungsarm (10) angeordneten Führungsbeschlag (37) aktiviert und deaktiviert wird, sodass, wenn sich die Tür in der vorbestimmten Position befindet, der bewegliche Anschlag (24):
- durch eine gemeinsame Drehung des ersten Betätigungsarms (10) relativ zum ersten Unterarm (11) in einer Drehrichtung aktiviert wird;
- durch eine gemeinsame Drehung des ersten Betätigungsarms (10) relativ zum ersten Unterarm (11) in der anderen Drehrichtung deaktiviert wird.

7. Luftfahrzeugtür nach Anspruch 6, **dadurch gekennzeichnet, dass** der bewegliche Anschlag (24) auf einem mit dem Flügel (5) fest verbundenen Sockel (30) montiert ist und einen mit einem ersten Kontaktelement (32) ausgestatteten ersten Arm (31) und einen mit einem zweiten Kontaktelement (34) ausgestatteten zweiten Arm (33) aufweist, wobei das zweite Kontaktelement (34) von einer mit dem ersten Unterarm (11) fest verbundenen Anschlagfläche (38) beabstandet angeordnet ist, wenn das erste Kontaktelement (32) durch den Führungsbeschlag (37) bewegt wird.

8. Luftfahrzeugtür nach Anspruch 7, **dadurch gekennzeichnet, dass** der bewegliche Anschlag (24) ein elastisches Vorspannelement (35) aufweist, das den beweglichen Anschlag (24) in eine Ruheposition gegen den Sockel (30) vorspannt.

9. Luftfahrzeugtür nach einem der vorangehenden Ansprüche, **dadurch gekennzeichnet, dass** der Verriegelungs-/Entriegelungsmechanismus Mittel umfasst, die eine relative Bewegung des ersten Betätigungsarms (10) und des Flügels (5) bewirken.

10. Luftfahrzeugtür nach Anspruch 9, **dadurch gekennzeichnet, dass** der Verriegelungs-/Entriegelungsmechanismus eine Führungsbahn (25) und einen Betätigungsfinger (26) aufweist, wovon eine(r) fest mit dem ersten Betätigungsarm (10) verbunden ist und der bzw. die andere fest mit dem Flügel (5) verbunden ist, wobei der Weg des Betätigungsfingers (26) in der Führungsbahn (25) eine relative Bewegung des ersten Betätigungsarms (10) und des Flügels (5) bewirkt.

11. Luftfahrzeugtür nach Anspruch 10, **dadurch gekennzeichnet, dass** die Tür beweglich ist zwischen:
- einer Verriegelungs-/Entriegelungskonfiguration, in der sich die Haltevorrichtung in der Freigabeposition befindet und der Betätigungsfinger (26) von der Führungsbahn (25) gefangen ist;
- einer Öffnungskonfiguration, in der sich die Haltevorrichtung in der Blockierposition befindet und der Betätigungsfinger (26) von der Führungsbahn (25) freigegeben ist.

12. Luftfahrzeugtür nach Anspruch 11, **dadurch gekennzeichnet, dass** sie Türanschläge (7) und Rahmenanschläge (4) aufweist, die dazu geeignet sind, den Flügel (5) seitlich am Türrahmen (3) zu verriegeln, wobei die Tür zur Ver- und Entriegelung durch seitliche Bewegungen des Flügels (5) relativ zum Türrahmen (3) geeignet ist.

13. Verfahren zum Öffnen einer Luftfahrzeugtür nach einem der Ansprüche 1 bis 12, **dadurch gekennzeichnet, dass** es Folgendes umfasst:
- eine erste Entriegelungsphase, in der sich die Haltevorrichtung in der Freigabeposition befindet;
- eine zweite Öffnungsphase, in der sich die Haltevorrichtung in der Blockierposition befindet.

14. Öffnungsverfahren nach Anspruch 13, **dadurch gekennzeichnet, dass** zwischen der Entriegelungsphase und der Öffnungsphase der Flügel (5) eine vorbestimmte Position passiert, in der die Haltevorrichtung durch die Vorspannung eines beweglichen Anschlags (24), der fest mit dem Flügel (5) verbunden ist und durch einen fest mit dem ersten Betätigungsarm (10) verbundenen Führungsbeschlag (37) betätigt wird, gegenüber einer fest mit dem erste Unterarm (11) verbundenen Anschlagfläche (38) in die Blockierposition übergeht.

## Claims

1. An aircraft door comprising:
- a leaf (5);
- a surround comprising a door frame (3) intended to be fixed to the fuselage of the aircraft;
- a door locking/unlocking mechanism adapted to move the leaf (5) relative to the door frame (3);
- a first handling arm (10) and a first forearm (11) interconnected by a pivot connection (12), the first handling arm (10) being connected to the door frame (3) by a pivot connection (13) and the first forearm (11) being connected to the leaf (5) by a pivot connection (14);
- a second handling arm (15) and a second forearm (16) interconnected by a pivot connection (17), the second handling arm (15) being connected to the door frame (3) by a pivot connection (18) and the second forearm (16) being connected to the leaf (5) by a pivot connection (19);
this aircraft door being **characterized in that** it comprises:
- a holding device, movable between: a locking position in which the first forearm (11) and the second forearm (16) are immobilized relative to the leaf (5); and an unlocking position in which the first forearm (11) and the second forearm (16) are free to pivot relative to the leaf (5) in at least one direction of rotation.

2. The aircraft door as claimed in claim 1, **characterized in that** the holding device comprises a first stop (21) and a second stop (22) adapted to immobilize the rotation of the first forearm (11) and of the second forearm (16) relative to the leaf (5) in one direction of rotation.

3. The aircraft door as claimed in claim 2, **characterized in that** the holding device comprises a third stop (23) adapted to prevent the two forearms (11, 16) from coming together.

4. The aircraft door as claimed in claim 3, **characterized in that** the holding device comprises a stop (24) movable between: an activated position in which the movable stop (24) locks the position relative to the leaf (5) of one of the forearms against at least one of said stops; and a deactivated position in which the movable stop (24) is outside the radius of action of the forearm.

5. The aircraft door as claimed in claim 4, **characterized in that** it has a predetermined position in which the first stop (21) is arranged between the leaf (5) and the first forearm (11), the second stop (22) is arranged between the leaf (5) and the second forearm (16), the third stop (23) is arranged between the first forearm (11) and the second forearm (16), and the movable stop (24) is in the activated position and arranged between the leaf (5) and the first forearm (11).

6. The aircraft door as claimed in claim 5, **characterized in that** the movable stop (24) is activated and deactivated by a guide fitting (37) arranged on the first handling arm (10) so that, when the door is in said predetermined position, the movable stop (24):
- is activated by a mutual rotation in one direction of rotation of the first handling arm (10) relative to the first forearm (11);
- is deactivated by a mutual rotation in the other direction of rotation of the first handling arm (10) relative to the first forearm (11).

7. The aircraft door as claimed in claim 6, **characterized in that** the movable stop (24) is rotatably mounted on a base (30) secured to the leaf (5) and comprises a first arm (31) provided with a first contact element (32) and a second arm (33) provided with a second contact element (34), the second contact element (34) being arranged away from a stop surface (38) secured to the first forearm (11) when the first contact element (32) is moved by the guide fitting (37).

8. The aircraft door as claimed in claim 7, **characterized in that** the movable stop (24) comprises an elastic return element (35) urging the movable stop (24) toward a rest position against the base (30).

9. The aircraft door as claimed in any one of the preceding claims, **characterized in that** the locking/unlocking mechanism comprises means causing a relative movement of the first handling arm (10) and of the leaf (5).

10. The aircraft door as claimed in claim 9, **characterized in that** the locking/unlocking mechanism comprises a guide track (25) and an actuating finger (26), one of which is secured to the first handling arm (10) and the other of which is secured to the leaf (5), the path of the actuating finger (26) in the guide track (25) causing a relative movement of the first handling arm (10) and of the leaf (5).

11. The aircraft door as claimed in claim 10, **characterized in that** the door is movable between:
- a locking/unlocking configuration in which the holding device is in the unlocking position and the actuating finger (26) is captive to the guide track (25);
- an opening configuration in which the holding device is in the locking position and the actuating finger (26) is released from the guide track (25).

12. The aircraft door as claimed in claim 11, **characterized in that** it comprises door stops (7) and frame stops (4) adapted to laterally lock the leaf (5) on the door frame (3), the door being adapted to locking and unlocking by lateral movements of the leaf (5) relative to the door frame (3).

13. A method for opening an aircraft door as claimed in one of claims 1 to 12, **characterized in that** it comprises:
- a first unlocking phase in which the holding device is in the unlocking position;
- a second opening phase in which the holding device is in the locking position.

14. The opening method as claimed in claim 13, **characterized in that**, between the unlocking phase and the opening phase, the leaf (5) passes through a predetermined position in which the holding device passes into the locking position by the return, facing a stop surface (38) secured to the first forearm (11), of a movable stop (24) secured to the leaf (5) and actuated by a guide fitting (37) secured to the first handling arm (10).
